# EUROPEAN PATENT APPLICATION

(11) **EP 4 838 270 A1**
(43) Date of publication of application: **11.11.2026**
(21) Application number: 25868128.7
(22) Date of filing: 18.09.2025
(51) Int. Cl.: G02B 5/08

(54) **REFLECTIVE FILM CAUSING VISUAL DISTURBANCE TO BIRDS, MANUFACTURING METHOD THEREFOR AND LIGHT-SHIELDING DEVICE**

(30) Priority: 19.09.2024 HK 32024096952
(71) Applicant: Masterkote Film Centre Limited, Hong Kong (HK)
(72) Inventor: WONG, Chi Keung, Hong Kong (CN)
(74) Representative: Ullrich & Naumann PartG mbB
(86) International application number: PCT/IB2025/059343
(87) International publication number: WO 2026/062535

(57) **Abstract**

The present invention relates to a reflective film, causing visual disturbance to birds, comprising: at least one reflective layer comprising a material having a metallic composition and/or a material having a non-metallic composition, at least one color layer configured to reflect monochromatic light or polychromatic light, at least one adhesive layer connecting said reflective layer and said color layer, characterized in that, said reflective film being able to reflect light with wavelength between 280 nm and 2500 nm, thereby causing visual disturbance to birds. The present invention further relates to a shading apparatus comprising the reflective film causing visual disturbance to birds and a method for preparing the reflective film causing visual disturbance to birds.

## Description

### Technical field

The present invention relates to the technical field of reflective film causing visual disturbance to birds. Specifically, the present invention relates to a reflective film causing visual disturbance to birds, a method for preparing thereof, and a shading apparatus. In particular, the present invention relates to a reflective film for alerting birds, specifically reflecting an electromagnetic waveband.

### Background of prior art

Birds being injured or killed by colliding with glass windows or glass curtain walls during flight (known as "bird collision") is one of the most severe survival threats currently facing wild birds. It is estimated that in Canada, the number of individual birds killed due to bird collision each year can reach as high as 16 million to 42 million. In the United States, this figure may be as staggering as 365 million to 988 million. During the daytime, bird collisions typically occur for two common reasons: in one case, birds see reflections of habitats or the sky on the glass surface and mistakenly believe they can reach that apparent location, so they fly directly towards the glass; in the other case, birds see plants or open space on the other side through the transparent glass and mistakenly think they can fly through it to the opposite side. In addition, this is closely related to the sensory characteristics of birds. Unlike humans, birds have stronger lateral (side) vision than frontal vision. While flying, they often need to turn or tilt their heads to watch for predators or search for prey, resulting in relatively low visual resolution in the forward direction of flight. This makes it difficult for them to effectively detect obstacles ahead.

In the state of arts, applying a dot matrix with 5 × 5 cm spacing and 1 cm diameter, or vertical lines with spacing 10 cm to glass can effectively prevent bird collisions. These patterns are preferably mounted on the outer side of the glass so that they can simultaneously address bird collisions caused by both reflection and transmission through the glass. However, such solutions bring significant inconvenience. For example, mounting adhesive film on the glass curtain walls of existing high-rise buildings requires enormous manpower and time investment, and subsequent maintenance and replacement also incur costs.

In addition, bird collision prevention thin films or coatings applied to glass are also known. For example, patent WO2023/212389 discloses a formulation comprising an adhesive, a carrier, and a visible light/ultraviolet light absorbing component. The formulation is applied to glass to produce a motif that is visible to birds but invisible to the human eye. For example, patent US2015/0160385 discloses a bird collision prevention thin film comprising a polymer layer and a textured layer containing an optical brightener.

In the state of arts, bird collision prevention apparatuses are mounted on either the light-receiving side or the backlight side of the glass to reflect incident light, particularly through specular reflection, but unable to provide or provide only little diffuse reflection. This significantly reduces the effectiveness of bird collision prevention. Furthermore, both the mounting and dismounting of bird collision prevention thin films are quite inconvenient. This not only increases the cost of renovating buildings with bird collision prevention measures but also results in the thin films applied to window glass surfaces often being unrecyclable, leading to a waste of resources. For bird collision prevention thin films mounted outdoors, their life spans are shortened due to exposure to outdoor weather and climate conditions. Furthermore, bird collision prevention thin films in the state of arts require the formation of patterns or textures on the glass that are distinct enough for birds to recognize, which may compromise the building's appearance per se. No technical solution has yet been developed to address these issues in the state of arts.

### Summary of the Invention

To address the problems in the prior art described above, according to a first aspect of the present invention, the embodiment of the present invention provides a reflective film causing visual disturbance to birds, comprising:
at least one reflective layer comprising a material having a metallic composition and/or a material having a non-metallic composition,
at least one color layer configured to reflect monochromatic light or polychromatic light,
at least one adhesive layer connecting said reflective layer and said color layer,
wherein, said reflective film being able to reflect light with wavelength between 280 nm and 2500 nm, thereby causing visual disturbance to birds. Light within this wavelength range is visible light to birds. Reflecting visible light to birds helps birds notice obstacles ahead, thereby reducing the incidence of bird collisions.

Further, said material having a metallic composition being selected from at least one of a metal, a metal oxide, and a metal sulfide, wherein the content of said material of metallic composition in said reflective layer is between 0.1 wt% and 10 wt%.

Further, said metal comprising at least one of gold, silver, platinum, molybdenum, iron, niobium, tin, aluminum, chromium, cobalt, manganese, nickel, copper, and titanium.

Further, said metal oxide comprising at least one of titanium oxide, zinc oxide, aluminum oxide, and lead (II) oxide; and/or said metal sulfide comprising at least one of zinc sulfide, iron sulfide, zinc sulfide, lead sulfide, copper sulfide, cadmium sulfide, silver sulfide.

Further, said having non-metallic composition comprising at least one of silicon oxide, ceramics, and organic compounds, wherein the content of said material of non-metallic composition in said reflective layer is between 0.1 wt% and 10 wt%.

Further, said reflective film having a transmittance for visible light of 50% or less, preferably between 10% and 20%, more preferably of 2% or less.

Further, said material having a metallic composition and/or said material having a non-metallic composition being deposited in the form of a film on a polymeric substrate, said polymeric substrate being made of at least one of polyethylene, polypropylene, ethylene-vinyl acetate copolymer, polyvinyl butyral, polyethylene terephthalate, and polyolefin elastomers.

Further, said material having a metallic composition and/or said material having a non-metallic composition being deposited on said polymeric substrate by physical vapor deposition.

Further, said reflective layer having a thickness between 1 micrometer and 25 micrometers.

Further, said material having a metallic composition and/or said material having a non-metallic composition forming motifs and/or patterns on the polymeric substrate.

Further, said material having a metallic composition and/or said material having a non-metallic composition not forming motifs and/or patterns on the polymeric substrate.

Further, said color layer being free of motifs and/or patterns.

Further, said color layer and/or said adhesive layer having a UV inhibitor.

Further, said color layer being a whole-body dyed layer.

Further, depending on the thickness of said reflective film, said reflective film being configured to have the following structures from bottom to top or from top to bottom:
- a first layer as said reflective layer,
- a second layer as said adhesive layer,
- a third layer as said color layer,

whereby said reflective film being able to reflect light of all waveband from 280 nm to 2500 nm, or
said reflective film being able to reflect light of any wavelength and/or of any waveband from 280 nm to 2500 nm.

Further, depending on the thickness of said reflective film, said reflective film being configured to have the following structures from bottom to top or from top to bottom:
- a first layer and a fifth layer as said color layers or color coating laminated layers,
- a second layer and a fourth layer as said adhesive layers, and
- a third layer as said color layer,
whereby said reflective film being able to reflect light of any wavelength and/or of any waveband from 280 nm to 2500 nm.

According to a second aspect of the present invention, an embodiment of the present invention provides a shading apparatus, comprising:
a curtain rod fixed to at least one side out of a window frame, and
a shading body provided on said curtain rod, said shading body is provided with a reflective film according to the first aspect of the present invention.

Further, said shading body is a shutter, a cellular shade, a shading roller or a curtain.

Further, said shading body has a transmittance for visible light of 80% or less, preferably of 20% or less, more preferably of 10% or less, more preferably of 2% or less.

Preferably, said shading apparatus is for indoor use only.

According to a third aspect of the present invention, an embodiment of the present invention provides a method for preparing a bird collision prevention reflective film, comprising the following steps:
a) preparing at least one reflective layer comprising a material having a metallic composition and/or a material having a non-metallic composition;
b) applying an adhesive on at least one surface of said reflective layer to form at least one adhesive layer;
c) providing at least one color layer on said at least one adhesive layer, which may be configured to reflect monochromatic light or polychromatic light,
characterized in that, said reflective film is able to reflect light with wavelength between 280 nm and 2500 nm, thereby causing visual disturbance to birds.

Further, said material having a metallic composition being selected from at least one of a metal, a metal oxide, and a metal sulfide, wherein the content of said material of a metallic composition in said reflective layer is between 0.1 wt% and 10 wt%.

Further, said metal comprising at least one of gold, silver, platinum, molybdenum, iron, niobium, tin, aluminum, chromium, cobalt, manganese, nickel, copper, and titanium, and/or said metal oxide comprising at least one of titanium oxide, zinc oxide, aluminum oxide, and lead (II) oxide; and/or said metal sulfide comprising at least one of zinc sulfide, iron sulfide, zinc sulfide, lead sulfide, copper sulfide, cadmium sulfide, silver sulfide.

Further, said material having non-metallic composition comprising at least one of silicon oxide, ceramics, and organic compounds, wherein, the content of said material having non-metallic composition in said reflective layer is between 0.1 wt% and 10 wt%.

Further, said material having a metallic composition and/or said material having a non-metallic composition being deposited in the form of a film on a polymeric substrate, wherein said polymeric substrate is made of at least one of polyethylene, polypropylene, ethylene-vinyl acetate copolymer, polyvinyl butyral, polyethylene terephthalate, and polyolefin elastomers.

Further, said material having a metallic composition and/or said material having a non-metallic composition being deposited on said polymeric substrate by physical vapor deposition or on said polymeric substrate by magnetron sputtering.

Further, in step b), comprises applying an adhesive on the first surface of said reflective layer to form a first adhesive layer, and applying an adhesive on the second surface, opposite to the first surface, to form a second adhesive layer; and in step c), comprises forming a first color layer or a first color coating laminated layer on said first adhesive layer, and forming a second color layer or a second color coating laminated layer on said second adhesive layer.

Further, at least one color coating laminated layer is provided on said first adhesive layer or said second adhesive layer, and the step of providing said color coating laminated layer comprises film formation and curing.

Compared with the prior art, the reflective film causing visual disturbance to birds according to the present invention can bring the following beneficial effects:
1. applying indoors to increases diffuse reflection of light while reducing specular reflection, thereby reducing visual illusions for birds;
2. reflecting light with wavelengths between 280 nm and 2500 nm, which enhances birds' ability to recognize obstacles;
3. without any preset motifs and/or patterns, thus the reflective film according to the present invention can be monochromatic or provided with any motifs and/or patterns thereon to match the appearance design of the building;
4. providing on an indoor shading apparatus, therefore both its mounting and dismounting are very convenient, thus reducing the cost of bird collision prevention renovation on buildings, while also avoiding the disturbance of outdoor weather and climate, thereby extending the life span of the reflective film.

### Brief description of drawings

Figure 1 is the structural schematic view of the reflective film in the first embodiment of the present invention.
Figure 2 is the structural schematic view of the reflective film in the second embodiment of the present invention.
Figure 3 is the structural schematic view of the reflective film in the third embodiment of the present invention.

Reference numerals in the drawings are as follow:
reflective layer 1, adhesive layer 2, color layer 3, first adhesive layer 2a, first color layer 3a, second adhesive layer 2b, second color layer 3b, color coating laminated layer 4.

### Detail description and preferred embodiments

To make the objectives, solutions, and advantages of the present invention clearer, the solutions of the present invention will be described in detail below with reference to the accompanying drawings in the embodiments of the present invention. It should be understood that terms such as "first" and "second" appearing herein are used merely to distinguish different components and should not be construed as limiting the scope of the components. Furthermore, terms such as "on," "below," "inside," and "outside" used herein are intended solely for the convenience of description and are not intended to limit the scope of the invention.

### Embodiment 1

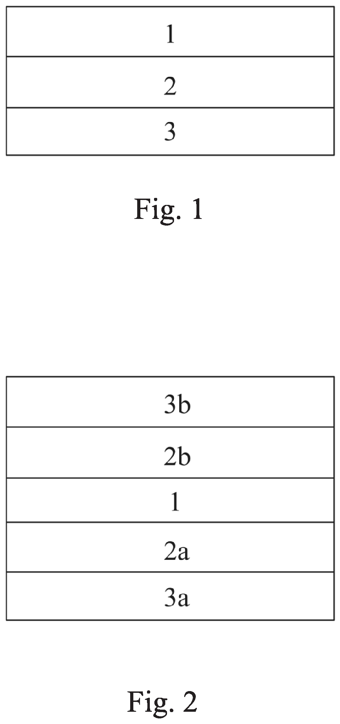

This embodiment provides a reflective film causing visual disturbance to birds, as shown in Figure 1, comprising, from top to bottom, a reflective layer 1, an adhesive layer 2, and a color layer 3. In this embodiment, the reflective layer 1 comprising a polymeric substrate and a material having a metallic composition. In other embodiments, the reflective layer 1 comprises a polymeric substrate and a material having a non-metallic composition. In other embodiments, reflective layer 1 comprises a polymeric substrate, a material having a metallic composition, and a material having a non-metallic composition. Specifically, the polymeric substrate is polyethylene (PE), more preferably low-density polyethylene (LDPE), to provide superior flexibility; and the metallic component is aluminum, with an aluminum content of 5 wt% based on the total weight of the reflective layer. In other embodiments, the aluminum content may be 10 wt%, 20 wt%, 30 wt%, 40 wt%, 50 wt%, 60 wt%, 70 wt%, 80 wt%, 90 wt%, or 100 wt%. Furthermore, aluminum is deposited on the polymeric substrate via physical vapor deposition (PVD). Specifically, physical vapor deposition methods such as magnetron sputtering type, evaporation deposition, sputtering, ion plating, magnetron sputtering, cathodic arc deposition, electron beam physical vapor deposition, and pulsed laser deposition may be used to deposit a material having a metallic composition onto the polymeric substrate.

In other embodiments, the surface of the reflective layer may be covered with a transparent layer, also known as a scratch-resistant layer, to protect the reflective layer and prevent oxidation of metal contained therein (if there is any). The material for the transparent layer may be selected from, but is not limited to, acrylic. In other embodiments, the transparent layer, also known as the scratch-resistant layer, may be a color layer.

In other embodiments, the polymeric substrate may also be at least one of polypropylene (PP), ethylene-vinyl acetate copolymer (EVA), polyvinyl butyral (PVB), polyethylene terephthalate, and polyolefin elastomers (POE).

In other embodiments, the metal in the material having a metallic composition may be at least one of gold, silver, platinum, molybdenum, iron, niobium, tin, chromium, cobalt, manganese, nickel, copper, and titanium. Likewise, the metal is also deposited on the polymeric substrate via physical vapor deposition. The content of the metallic composition may also be 0.1 wt%, 0.5 wt%, 1 wt%, 2 wt%, 3 wt%, 4 wt%, 5 wt%, 6 wt%, 7 wt%, 8 wt%, 9 wt%, or 10 wt%. In other embodiments, the content of the metallic composition may also be 10 wt%, 20 wt%, 30 wt%, 40 wt%, 50 wt%, 60 wt%, 70 wt%, 80 wt%, 90 wt%, or 100 wt%. In other embodiments, the content of the metallic composition may also be any value between 0.1 wt% and 100 wt%.

In other embodiments, the material having a metallic composition may also be a metal oxide, such as titanium oxide, zinc oxide, aluminum oxide, or lead (II) oxide. In other embodiments, the material having a metallic composition may also be a metal sulfide, such as zinc sulfide, iron sulfide, zinc sulfide, lead sulfide, copper sulfide, cadmium sulfide, or silver sulfide.

In this embodiment, the thickness of the reflective layer is 1 micrometer. In other embodiments, the thickness of the reflective layer may be 10 micrometers, 15 micrometers, 20 micrometers, or 25 micrometers. In other embodiments, the thickness of the reflective layer is between 1 micrometer to 25 micrometers.

In some embodiments, the thickness of the reflective film is between 0.05 millimeter and 0.25 millimeter.

The adhesive layer 2 is formed from a transparent adhesive and may be any commercially available transparent adhesive, such as transparent epoxy adhesive, acrylic adhesive, and resin adhesive. The transparent adhesive does not affect the light absorption and reflection of the reflective layer 1, nor does it affect the color of the reflective film appearance. In some embodiments, the adhesive contains a UV inhibitor. In some embodiments, the adhesive is colored.

In this embodiment, the color layer 3 is a blue transparent plastic film, which may be any commercially available blue transparent plastic film, such as a blue PVC film or a blue PE film. Birds' eyes are particularly sensitive to specific colors, such as red, blue, and ultraviolet. Therefore, in other embodiments, the color layer 3 may be red, blue, or other colors. When the reflective film reflects these colors to which birds are sensitive, it can attract the attention of flying birds to obstacles ahead. In some embodiments, the color layer is a whole-body dyed layer. A whole-body dyed layer refers to a process in which the entire thickness of the material (e.g., the plastic film in the present invention) is dyed by the way of penetrating the entire depth of the material with color. This results in a more uniform and durable color which is resistant to fading or wear. A whole-body dyed layer means that the color is not merely on the surface but permeates throughout the entire material. This is advantageous because it ensures that scratches or wear are less noticeable, as the color remains consistent throughout the material's thickness. The process for achieving a whole-body dyed layer may vary depending on the material used and the dyeing technique, which is well known in the art and will not be described in detail here.

The reflective film in this embodiment is intended to be mounted on an indoor shading apparatus. A color layer 3 is provided on the reflective layer 1 in this embodiment; the color layer 3 serves as a mounting surface, while the side without the color layer 3 serves as a light-receiving surface. In other embodiments, the reflective layer 1 may serve as the mounting surface, and the color layer 3 may serve as the light-receiving surface. The reflective film in this embodiment is thin and highly flexible, making it suitable for application to the light-receiving surface of, for example, a curtain or a shading roller, to achieve diffuse reflection of light. Diffuse reflection refers to the phenomenon when a beam of parallel incident light striking a rough surface which scatter the light in various directions. Unlike specular reflection, where the reflected light remains parallel to each other, diffuse reflection allows an observer to observe the object from different angles, which is particularly advantageous for preventing bird collisions. In particular, when curtain walls or windows with smooth surface reflect landscapes such as the sky or habitat, birds are prone to mistakenly believe that the location of the curtain wall or window is their intended destination. Therefore, a reflective film designed to diffuse light reflection can minimize specular reflection as much as possible, thereby reducing visual illusions for birds and consequently reducing bird collision accidents.

In addition, the reflective film in this embodiment is capable of reflecting light with wavelengths between 280 nm and 2500 nm. This wavelength range covers both ultraviolet and red light, lights within such range are also visible lights for birds. Reflecting this visible light allows birds to notice obstacles ahead.

The reflective film can be attached to the light-facing surface of the shading apparatus by glueing or any known reversible attachment method (such as clamping). This means that simply mounting the reflective film on the shading apparatus is all that is needed to complete the bird collision prevention renovation of the building, making the process both convenient and cost-effective. Similarly, removing the reflective film is also very convenient. Furthermore, since the reflective film is provided indoors, damage to the reflective film from outdoor weather conditions is reduced, thereby extending its lifespan.

In the present invention, the expression "causing visual disturbance to birds" refers to interfere with and/or alert birds by means of light with a wavelength between 280 nm and 2500 nm, thereby enhancing their ability to recognize obstacles, particularly building glass, and thus achieving bird repelling and reducing bird collisions. Furthermore, the reflective film of the present invention can effectively reduce birds lingering by the window edges, thereby reducing hygiene issues caused by bird egestion at the window edges.

In the present invention, the reflective film has a transmittance for visible light of 80% or less, further of 50% or less, of 20% or less, of 10% or less, and in some embodiments, even of 2% or less.

### Embodiment 2

This embodiment provides a bird collision prevention reflective film comprising two color layers, as shown in Figure 2, which comprises, from top to bottom: a second color layer 3b, a second adhesive layer 2b, a reflective layer 1, a first adhesive layer 2a, and a first color layer 3a. In this embodiment, the reflective layer 1 comprises a polymeric substrate and a material of metallic composition. Specifically, the polymeric substrate is polypropylene (PP), and the material of metallic composition comprises titanium dioxide. Based on the total weight of the reflective layer 1, the content of titanium dioxide is of 8 wt%. In other embodiments, the content of titanium dioxide may be 10 wt%, 20 wt%, 30 wt%, 40 wt%, 50 wt%, 60 wt%, 70 wt%, 80 wt%, 90 wt%, or 100 wt%. Similarly, the titanium dioxide in this embodiment is also deposited on the polymeric substrate by physical vapor deposition.

In other embodiments, the reflective layer 1 comprises a polymeric substrate and a material of non-metallic composition. In other embodiments, the reflective layer 1 comprises a polymeric substrate, a material having a metallic composition, and a material having a non-metallic composition. Specifically, the material having a non-metallic composition may be organic compounds such as benzotriazole compounds, triazine compounds, diphenyl ketone compounds, formamidine compounds, malonate compounds, and benzoxazine compounds, it may also be silicon oxide or ceramics. In other embodiments, the content of the non-metallic composition may be 0.1 wt%, 0.5 wt%, 1 wt%, 2 wt%, 3 wt%, 4 wt%, 5 wt%, 6 wt%, 7 wt%, 8 wt%, 9 wt%, or 10 wt%. In other embodiments, the content of the non-metallic composition may also be 10 wt%, 20 wt%, 30 wt%, 40 wt%, 50 wt%, 60 wt%, 70 wt%, 80 wt%, 90 wt%, or 100 wt%. In other embodiments, the content of the non-metallic composition may also be any value between 0.1 wt% and 100 wt%.

Similar to Embodiment 1, the first adhesive layer 2a and the second adhesive layer 2b in this embodiment are both formed from a transparent adhesive. The first and second adhesive layers 2a and 2b may be formed from the same adhesive, and may be formed from different adhesives. For example, the first and second adhesive layers 2a and 2b may both be formed from a transparent epoxy adhesive. In practical applications, the composition of the adhesive may be adjusted according to specific conditions. For example, the second adhesive layer 2b located on the light-receiving surface of the reflective layer 1 may be formed from an adhesive containing a UV inhibitor, such as UV-resistant epoxy resin. UV-resistant adhesives are less prone to yellowing or embrittlement and other phenomena after long-term use, thereby enhancing the UV resistance of reflective film while extending its lifespan.

In another embodiment, the first and/or second color layers 3a, 3b also comprise a UV inhibitor, for example, a UV inhibitor may be added in the preparation of the first and/or second color layers 3a, 3b. The UV inhibitor may be any known component in the prior art, such as benzotriazole compounds. The first and/or second color layers 3a, 3b containing a UV inhibitor enhance the UV resistance of reflective film while extending its lifespan.

Unlike Embodiment 1, in this embodiment, both the first color layer 3a and the second color layer 3b are red PVC thin films. The red PVC thin film transmits red light with wavelengths between 650 nm and 2500 nm, enabling the reflective film to reflect specific color wavebands within the range of 280 nm to 650 nm. In other embodiments, the first and second color layers 3a and 3b may be replaced by thin films in other colors, enabling the reflective film to reflect, for example, orange light with wavelengths between 635 nm and 590 nm, yellow light with wavelengths between 590 nm and 560 nm, or blue light with wavelengths between 490 nm and 450 nm etc. It may even reflect ultraviolet light with wavelengths between 280 nm and 420 nm. It is understood that, to enhance bird collision prevention effect, colors to which birds are sensitive, such as red or blue, should be selected. In practical applications, appropriate colors may be selected based on the building's appearance, and it is even possible to provide motifs and/or patterns on the reflective film to match the building's appearance.

In this embodiment, the reflective film is intended to be mounted on the light-receiving surface of an indoor shading apparatus. Given the relatively great thickness of the reflective film in this embodiment, it is preferably mounted on the light-receiving surface of, for example, a shutter blade, as this prevents the reflective film from folding or bending.

### Embodiment 3

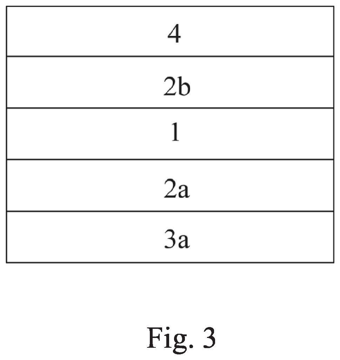

This embodiment provides a reflective film, as shown in Figure 3, comprising, from top to bottom, a color coating laminated layer 4, a second adhesive layer 2b, a reflective layer 1, a first adhesive layer 2a, and a second color layer 3b. The color coating laminated layer refers to a colored coating deposited in the form of a film on the surface of an object. It can be applied to the object's surface using any known coating process, such as spray coating, spin coating, or electrostatic spraying. Such layer may be monochromatic or multicolored, and may even feature any motif and/or pattern. In this embodiment, the color coating laminated layer 4 is made from a resin coating containing red pigment.

Similar to the above embodiments, the reflective layer 1 in this embodiment comprises a polymeric substrate and a material of non-metallic composition. In other embodiments, the reflective layer 1 comprises a polymeric substrate, a material having a metallic composition, and a material of non-metallic composition. The polymeric substrate is ethylene-vinyl acetate copolymer (EVA), and the metallic composition is zinc oxide, and the material of non-metallic composition is benzotriazole compounds.

Similar to the above embodiments, the first and second adhesive layers 2a and 2b are formed from an adhesive.

Another difference between this embodiment and the aforementioned embodiments is that a color coating laminated layer 4, rather than a second color layer 3b, is provided on the light-receiving surface of reflective layer 1. This color coating laminated layer 4 may be made of a colored coating, such as a green polyester coating.

Similar to the above embodiments, the reflective film of this embodiment is able to reflect specific colors with wavelength between 280 nm and 2500 nm. It is understood that, preferably, the color of the color coating laminated layer 4 should match the color of the first color layer 3a so that the reflective film reflects specific colors.

The reflective film of this embodiment is also intended to be mounted on the light-receiving surface of an indoor shading apparatus.

In some embodiments, a reflective film comprises, from top to bottom, a second color coating laminated layer, a second adhesive layer, a reflective layer, a first adhesive layer, and a first color coating laminated layer is provided.

### Embodiment 4

The present embodiment provides a shading apparatus (not shown in the figure) comprising a curtain rod provided above a window frame and a shading body provided on the curtain rod, which is preferably retractably movable. In this embodiment, the shading body is a shading roller. The shading apparatus further comprises a manual control apparatus, such as a pull ring, for controlling the movement of the shading roller. An automatic control apparatus may also be provided. A reflective film according to the present invention is provided on the light-receiving surface of the shading body. The shading body may be made of any suitable material known in the prior art, such as nylon or polyester fiber.

For example, the reflective layer 1 of the reflective film in Embodiment 1 of this application is mounted on the light-receiving surface of the shading apparatus by means of glueing or clamping. Since the reflective film can be mounted on an existing shading apparatus, thus it saves on the cost of renovation of buildings for preventing bird collisions and also protects the film from outdoor weather and climate conditions, thereby extending its life span. Consequently, the dismounting of the reflective film is also convenient. When the shading apparatus needs to be replaced, the reflective film can be recovered at the same time to improve its utilization rate.

The shading apparatus has a visible light transmittance of 80% or less, and further, of 50% or less, of 20% or less, of 10% or less, and in some embodiments, even of 2% or less. This is desirable for reducing bird collision accidents. Low visible light transmittance results in low transparency of the glass; consequently, birds cannot see the scenery on the other side of the building through the glass, thereby reducing visual illusions of birds.

During use, the shading body is adapted to cover at least 25%, preferably 50%, and more preferably 75%, of the window area to achieve an optimal bird collision prevention effect.

In other embodiments, the shading body may also be a cellular shade, a shading roller, or a curtain.

### Embodiment 5

This embodiment provides a method for preparing a bird collision prevention reflective film, specifically comprising the following steps:
a) preparing at least one reflective layer, said reflective layer having a material of a metallic composition; in this embodiment, the reflective layer is prepared by metal sputtering to deposit aluminum on a polyethylene substrate.
b) applying an adhesive on the reflective layer to form at least one adhesive layer; in this embodiment, a transparent epoxy adhesive is applied on the reflective layer.
c) providing at least one color layer on the adhesive layer. In this embodiment, the color layer is a blue PVC plastic film.

In some embodiments, an adhesive layer may also be applied on both surfaces of the reflective layer, and a color coating laminated layer may be provided on at least one of the adhesive layers; the step of preparing the color coating laminated layer further comprises film formation and curing.

It should be understood that, in other embodiments, the reflective layer may also comprise a material of non-metallic components, and its specific selection may be referred to in the above embodiments.

In summary, the reflective film according to the present invention is applied indoors to increase diffuse reflection of light while reducing specular reflection, thereby reducing visual illusions for birds; it reflects light with wavelengths between 280 nm and 2500 nm, which enhances birds' ability to recognize obstacles; it does not contain any preset motifs and/or patterns, therefore, the bird collision prevention reflective film according to the present invention can be monochromatic or provided with any motifs and/or patterns thereon to match the building's appearance design and provided on an indoor shading apparatus, therefore both its mounting and dismounting are very convenient; thereby saving the cost of bird collision prevention renovation on buildings, while also protecting the reflective film from outdoor weather and climate conditions, thereby extending its life span.

It should be understood that, although this specification is described in terms of embodiments, not every embodiment contains only a single technical solution. The description in this specification is provided solely for the sake of clarity. Those skilled in the art should consider this specification as a whole; the technical solutions in the various embodiments may be appropriately combined to form other embodiments that those skilled in the art would understand. For example, the reflective layer, the material having a metallic composition, the material having a non-metallic composition, the color layer, the adhesive layer, and the descriptions related to the reflective film and their characteristics in different embodiments may be appropriately combined to form new embodiments. However, the scope of protection of the present invention is defined by the appended claims rather than the foregoing description; therefore, all modifications falling within the spirit and scope of the claims are included in the present invention and any references thereto.

## Claims

1. A reflective film, causing visual disturbance to birds, comprising:
a) at least one reflective layer comprising a material having a metallic composition and/or a material having a non-metallic composition, deposited in a form of a film on a polymeric substrate, said reflective layer having a thickness between 1 micrometer and 25 micrometers, said material having a metallic composition and/or said material having a non-metallic composition not forming motifs and/or patterns on said polymeric substrate, said material having a metallic composition being selected from at least one of a metal, a metal oxide and a metal sulfide, wherein said metal comprises at least one of gold, silver, platinum, molybdenum, iron, niobium, tin, aluminum, chromium, cobalt, manganese, nickel, copper, and titanium, and said material having non-metallic composition comprises at least one of silicon oxides, ceramics, and organic compounds;
b) at least one color layer, being a whole-body dyed layer and configured to reflect monochromatic light or polychromatic light, said color layer having a UV inhibitor;
c) at least one adhesive layer connecting said reflective layer and said color layer, said adhesive layer having a UV inhibitor;
**characterized in that**, said reflective film having a thickness between 0.05 millimeter and 0.25 millimeter and a transmittance for visible light of 2% or less, and being able to reflect light with wavelengths between 280 nm and 2500 nm, thereby causing visual disturbance to birds.

2. A reflective film, causing visual disturbance to birds, comprising:
at least one reflective layer comprising a material having a metallic composition and/or a material having a non-metallic composition,
at least one color layer configured to reflect monochromatic light or polychromatic light,
at least one adhesive layer connecting said reflective layer and said color layer,
**characterized in that**, said reflective film being able to reflect light with wavelength between 280 nm and 2500 nm, thereby causing visual disturbance to birds.

3. The reflective film according to claim 2, **characterized in that**, said material having a metallic composition being selected from at least one of a metal, a metal oxide, and a metal sulfide.

4. The reflective film according to claim 3, **characterized in that**, said metal comprising at least one of gold, silver, platinum, molybdenum, iron, niobium, tin, aluminum, chromium, cobalt, manganese, nickel, copper, and titanium.

5. The reflective film according to claim 3, **characterized in that**, said metal oxide comprising at least one of titanium oxide, zinc oxide, aluminum oxide, and lead (II) oxide; and/or said metal sulfide comprising at least one of zinc sulfide, iron sulfide, zinc sulfide, lead sulfide, copper sulfide, cadmium sulfide, silver sulfide.

6. The reflective film according to any one of claims 2 to 5, **characterized in that**, said having non-metallic composition comprising at least one of silicon oxide, ceramics, and organic compounds.

7. A reflective film according to any one of claims 2 to 5, **characterized in that**, said reflective film having a transmittance for visible light of 80% or less.

8. A reflective film according to claim 6, **characterized in that**, said reflective film having a transmittance for visible light of 80% or less.

9. The reflective film according to claim 7, **characterized in that**, said reflective film having a transmittance for visible light between 10% and 20%.

10. The reflective film according to claim 8, **characterized in that**, said reflective film having a transmittance for visible light between 10% and 20%.

11. The reflective film according to claim 7, **characterized in that**, said reflective film having a transmittance for visible light of 2% or less.

12. The reflective film according to claim 8, **characterized in that**, said reflective film having a transmittance for visible light of 2% or less.

13. The reflective film according to claim 6, **characterized in that**, said material having a metallic composition and/or said material having a non-metallic composition being deposited in the form of a film on a polymeric substrate, said polymeric substrate being made of at least one of polyethylene, polypropylene, ethylene-vinyl acetate copolymer, polyvinyl butyral, polyethylene terephthalate, and polyolefin elastomers.

14. The reflective film according to claim 13, **characterized in that**, said material having a metallic composition and/or said material having a non-metallic composition being deposited on said polymeric substrate by physical vapor deposition.

15. The reflective film according to any one of claims 9 to 14, **characterized in that**, said reflective layer having a thickness between 1 micrometer and 25 micrometers.

16. The reflective film according to any one of claims 13 to14, **characterized in that**, said material having a metallic composition and/or said material having a non-metallic composition forming motifs and/or patterns on said polymeric substrate.

17. The reflective film according to any one of claims 13-14, **characterized in that**, said material having a metallic composition and/or said material having a non-metallic composition not forming motifs and/or patterns on said polymeric substrate.

18. The reflective film according to any one of claims 9 to 14, **characterized in that**, said color layer being free of motifs and/or patterns.

19. The reflective film according to any one of claims 9 to 14, **characterized in that**, said color layer and/or said adhesive layer having a UV inhibitor.

20. A reflective film according to any one of claims 9 to 14, **characterized in that**, said color layer being a whole-body dyed layer.

21. The reflective film according to any one of claims 9 to 14, **characterized in that**, depending on the thickness of said reflective film, said reflective film being configured to have the following structures from bottom to top or from top to bottom:
- a first layer as said reflective layer,
- a second layer as said adhesive layer, and
- a third layer as said color layer,
whereby said reflective film being able to reflect light of all waveband from 280 nm to 2500 nm.

22. The reflective film according to any one of claims 9 to 14, depending on the thickness of said reflective film, said reflective film being configured to have the following structures from bottom to top or from top to bottom:
- a first layer as said reflective layer,
- a second layer as said adhesive layer, and
- a third layer as said color layer,
whereby said reflective film being able to reflect light of any wavelength and/or of any waveband from 280 nm to 2500 nm.

23. The reflective film according to any one of claims 9 to 14, **characterized in that**, depending on the thickness of said reflective film, said reflective film being configured to have the following structures from bottom to top or from top to bottom:
- a first layer and a fifth layer as said color layers or color coating laminated layers,
- a second layer and a fourth layer as said adhesive layers, and
- a third layer as said color layer,
whereby said reflective film being able to reflect light of any wavelength and/or of any waveband from 280 nm to 2500 nm.
